# EUROPEAN PATENT APPLICATION

(11) **EP 4 462 150 A1**
(43) Date of publication of application: **13.11.2024**
(21) Application number: 23173186.0
(22) Date of filing: 12.05.2023
(51) Int. Cl.: G01S 7/282, G01S 7/03, G01S 13/32, G01S 13/40, G01S 7/35, G01S 7/288

(54) **METHOD OF OPERATING A RADAR SYSTEM**

(71) Applicant: NXP B.V., 5656 AG Eindhoven (NL)
(72) Inventor: Kranabenter, Helmut, 5656 AG Eindhoven (NL); Lugitsch, David, 5656 AG Eindhoven (NL); Küchler, Wolfgang, 5656 AG Eindhoven (NL)
(74) Representative: Krott, Michel

(57) **Abstract**

Method of operating a radar system (100) comprising the steps:
- receiving a signal;
- determining a maximal amplitude and a corresponding phase of the received signal and, depending on the determined phase and maximal amplitude, performing at least one of the following steps:
a) setting the phase of the signal such that a phase angle of the received signal lies approximately in a middle of a quadrant of an I/Q diagram;
b) amplifying the received signal such that the dynamic range of a receiving unit (20) of the radar system (100) is optimized.

## Description

### TECHNICAL FIELD

The present disclosure relates to a method of operating a radar system. Furthermore, the present disclosure relates to a radar system. Furthermore, the present disclosure relates to a computer-implemented method for carrying out the proposed method.

### BACKGROUND

One of the most important key-performance-indicators (KPIs) of a radar system is its "dynamic range". The dynamic range represents a range between the maximal signal and the minimal signal to be received. The better or higher the dynamic range, the smaller the objects, which can be detected by means of the radar system. This is especially important for radar systems operating in full duplex mode utilizing a single antenna, because the self interference is the strongest channel impulse response (CIR) component. In conventional radar systems the full dynamic range cannot be used, because a certain back-off is needed to avoid clipping in all conditions.

Actual radar implementations require a dynamic range back-off, which means that a dynamic range that the technical radar system could provide, cannot be used in practice. A typical value for a back-off would be 6 dB (e.g. 3dB for the arbitrary phase of the strongest signal and another 3dB due to the RX gain step size). A 6 dB back-off means that the range of the radar is reduced by about 50%.

Conventional radar receivers employ an automatic gain control to maximize the dynamic range of the receiver. A RX gain step size is typically significant (a value of 3dB is quite common), leading to the fact that the signal power cannot be controlled fine enough to operate both ADCs (I and Q branch) in full swing. The dynamic range of the system has thus to be overdesigned, such that the effective dynamic range is always sufficient for the application.

US 9 833 200 B2 discloses low IF architectures for noncontact vital sign detection. Various examples of methods and systems are disclosed for vibrational frequency detection (e.g. noncontact vital sign detection) using digitally assisted low intermediate frequency (IF) architectures.

In conventional receivers the sensitivity of the system is increased by adaptively changing the gain in the two paths so that the subsequent ADC can exploit the full bit width. Furthermore, in conventional receivers with adaptive analog gain control, the maximum allowed signal level is sensed separately for the I-path and Q-path and the stronger signal defines the maximum allowed gain for both paths.

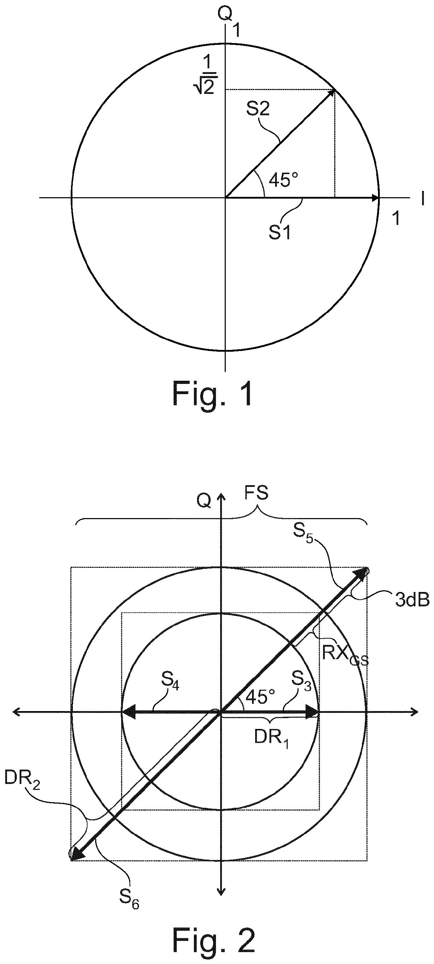

This leads to the fact that a baseband signal with constant amplitude (constant TX power) can be amplified by a factor of sqrt(2) more if it has 45° phase compared to a signal of the same amplitude and 0° phase, as shown in FIG. 1. With 0° phase only the I-path is carrying a signal, while for 90° the signal is only in the Q-path. With 45° phase, the signal is distributed to both paths I, Q at equal strength. Adapting the gain such that I and Q are at the maximum amplitude leads to the total signal power being by sqrt(2) higher compared to the 0° or 90° phase constellations.

### SUMMARY

A first aspect the present disclosure is directed to a method of operating a radar system, comprising the steps:
- receiving a signal;
- determining a maximal amplitude and a corresponding phase of the received signal and, depending on the determined phase and maximal amplitude, performing at least one of the following steps:
   a) setting the phase of the signal such that a phase angle of the received signal lies approximately in a middle of a quadrant of an I/Q diagram;
   b) amplifying the received signal such that the dynamic range of a receiving unit of the radar system is optimized.

In this way, a back off of the radar system is not necessary, which means that an optimized dynamic range is obtainable. E.g., a downstream ADC can use most, preferably all of its bits in the processing of radar signals. An I-branch und a Q-branch of the I/Q-diagram are uniformly magnified, which results in no saturation in the receiving path of the radar system. Summarizing, an optimized efficiency is obtainable for the proposed radar system. The signal modification could be either in the RX or in the TX or on both sides like explained below. Therefore, I would just say signal to be most generic and to cover all options. We adapt the gain such that we have full swing at subsequent modules (ADC). Furthermore this leads to optimized dynamic range of the overall system including TX and RX. In this way a cost function that is optimized is the dynamic range. This can be achieved by changing the gain and/or the phase.

A further aspect of the present disclosure is directed to a radar system, comprising:
- means for receiving a signal;
- means for determining a phase and a maximal amplitude of the received signal; and
- means for setting the phase in dependence of the determined phase and maximal amplitude such that a dynamic range of a receiving unit of the radar system is optimizable.

A further aspect of the present disclosure is directed to a computer-implemented method which, when executed by a radar system causes said radar system to carry out the proposed method.

In one or more embodiments, in step a) the phase is set in a range of appr. 40 degrees to appr. 50 degrees, preferably to appr. 45 degrees with respect to a quadrant of the I/Q diagram.

In one or more embodiments, in step a) the setting of the phase is performed completely in the receiving unit, or in step a) the setting of the phase is performed completely in a transmitting unit, or in step a) the setting of the phase is performed at least partially in the receiving unit and/or at least partially in the transmitting unit of the radar system.

In one or more embodiments, in step a) the setting of the phase is performed by means of a configurable delay.

In one or more embodiments, in step a) the setting of the phase is performed by means of a complex rotator. In this way, the setting of the phase can be implemented in several different ways.

In one or more embodiments, the determination of the maximal phase is performed by means of the receiving unit and the setting of at least the phase or the power is performed by means of the transmitting unit.

In one or more embodiments, the gain of the receiving unit is adjustable in specified steps.

In one or more embodiments, in step a) the phase is set in the baseband domain by means of a complex rotator.

In one or more embodiments, in step b) the transmitting unit is controlled, that it matches gain levels of the receiving unit, wherein a maximum gain level of the receiving unit is observed. Advantageously, in this way power is increased or reduced, such that the receiving unit needs not to be switched back to next level. The gain of the transmitting unit can be fine tuned, such that the receiving unit operates at the correct quantization level. Preferably, this is done by a rough levels of the receiving unit and by fine levels of the transmitting unit. Alternatively, this can also be done the other way around.

In one or more embodiments of the radar system, the means for detecting the maximal signal is at least partially arranged in the receiving unit or in the controlling unit.

In one or more embodiments of the radar system, the phase of the received signal is configured by means of a configurable delay or by means of a complex rotator.

In one or more embodiments of the radar system, the configurable delay is arranged at least partially in at least one of the following units: RF path of transmitting unit, RF path of receiving unit, local oscillator of transmitting unit, local oscillator of receiving unit.

### BRIEF DESCRIPTION OF DRAWINGS

The above discussion/summary is not intended to describe each embodiment or every implementation of the present disclosure. The drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. However, the disclosure is not limited to the examples of embodiment.

All illustrations in the drawings are schematical. It is noted that in different figures, similar or identical elements or features are provided with the same reference signs or with reference signs that are different from the corresponding reference signs only within the first digit. In order to avoid unnecessary repetitions, elements or features which have already been elucidated with respect to a previously described embodiment are not elucidated again at a later position of the description.

Various example embodiments may be more completely understood in consideration of the following detailed description in connection with the accompanying drawings, in which:
FIG. 1 is a I/Q diagram with two signals;
FIG. 2 is a I/Q diagram illustrating a main concept of the present disclosure;
FIG. 3 is an exemplary block diagram of a proposed radar system; and
FIG. 4 is a principle flow diagram of a proposed method.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

### DESCRIPTION OF EMBODIMENTS

Radio frequency (RF) receivers convert modulated RF-signals to baseband I/Q signals. With a receiver structure used by the RF receivers, two signal paths (I and Q) are present after a mixer. In general, these two paths can be processed separately, but it should be ensured that the same changes (e.g., amplification of the signal) are made in both paths.

Aspects of the present disclosure are believed to be applicable to a variety of different types of apparatuses, systems and methods involving radar systems and related communications. In certain implementations, aspects of the present disclosure have been shown to be beneficial when used in the context of automotive radar in environments susceptible to the presence of multiple objects within a relatively small region. While not necessarily so limited, various aspects may be appreciated through the following discussion of non-limiting examples which use exemplary contexts.

In the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

Referring to FIG. 1 now, a I/Q diagram is shown with an I-branch and a Q-branch, with two different receive signals S1, S2. One recognizes, that a first received signal S1 has no Q-component, however a full I-component, resulting in an angle of 0 degrees in the I/Q-diagram. On the other hand, a second received signal S2 has both an I-component and a Q-component, which results in an angle of 45 degrees in the I/Q-diagram. It is intended to amplify the I-component and the Q-component of the baseband signal, such that a downstream ADC (not shown) can preferably use most of its, preferably all of its bits. In this context it is aimed to amplify both components I, Q to the same extent. A value "1" of the I/Q diagram represents the maximum value of a downstream ADC (not shown). Arrows shown represent reflections of strongest targets, phase depends on a distance of the target from the radar system. In conventional systems, the phase is not influenceable.

Conventionally, a level detector is arranged in both branches I, Q, wherein the signal with the higher amplitude is used to calculate the maximum amplification or attenuation, respectively.

The amplifying of the received signal is preferably performed equally for the I-branch and for the Q-branch of the I/Q-diagram. However, the amplifying of the received signal can also be distributed to the branches I, Q in a different way.

The whole received power of the signal S1 can be in the I branch, which means that no received power is in the Q branch. The value "1" corresponds to the maximum of the ADC, which means that no amplification of the received signal is possible. The second received signal S2 is a signal, where the received power is equally divided between the I-branch and the Q-branch. As a consequence, the signal can be amplified by the factor SQRT 2. Advantageously, this would not result in a saturation or overflow of the receiving path, which means that the dynamic range wins the factor SQRT 2. This represents the optimal case, because the signal is equally divided into I and Q.

The present disclosure proposes several ways as to turn the received RF-signal into an optimal case as regards I-branch and Q-branch of the I/Q diagram.

FIG. 2 shows an I/Q diagram showing I-amplitudes and Q-amplitudes of four signals S3, S4, S5 and S6. A signal S3 comprises a worst case dynamic range DR₁, similar to the first received signal S1 shown in FIG. 1. A full swing amplitude FS represents the maximum I- and Q - amplitude within the I/Q-diagram. One recognizes a signal S5 in the first quadrant of the I/Q-diagram having an angle of 45 degrees, which means that I-amplitudes and Q-amplitudes are identical.

It is intended to have the highest possible gain in the receiving unit. However, if the signal is too strong, the receiving unit has to reduce its amplification, such that it does not drive into saturation. This typically works in stages or steps, which are shown in FIG. 2. A signal step is represented by RX_{GS}. RX_{GS} can have exemplary values of 1dB...3dB. In FIG. 2. RX_{GS} is assumed to be 2dB. Furthermore, both branches I, Q of signals are amplified to the same extent. A jump between levels is performed in the receiving unit. In order to improve a signal S3 that represents a poor dynamic range DR1, the following steps are performed. The signal S3 is amplified by one signal step (2dB) leading to a signal with FS in the I branch (not shown). The phase of this signal is shifted by 45 degrees leading to a signal lying at 45 degrees (not shown). This phase position allows the signal to be amplified by another 3dB to achieve FS in both the I and Q branch (shown as S5). Since the receiving unit only supports gain steps of 2dB, no 3dB gain can be achieved with the RX alone. Therefore the signal can either be amplified by one gain step (2dB) and the TX power is increased by 1dB, or it is amplified by two gain steps and the TX power is reduced by 1dB.

Normally, the step sizes in the RX are relatively coarse, and on the TX side the power can very finely and accurately adjusted so that it is just below a jump to the next level. The power of the transmitting unit 30 is increased or reduced, so that the receiving unit 20 can use its maximum gain level.

In this way, a better approach to the optimum is supported. Alternatively, also embodiments are possible which allow fine-tuning of the RX gain.

In the same way, a signal S6 can be processed, which is arranged in the third quadrant of the I/Q diagram. A maximal dynamic range is depicted as DR₂. One recognizes that in the case of signals S5, S6 an optimal gain can be obtained. In other words, signals having I/Q phases of S5, S6 can be amplified to an optimal extent. Not shown are signals being present in the second and fourth quadrant of the I/Q diagram with angles of 135 degrees and 315 degrees which can amplified to the same extent as the signals S5, S6.

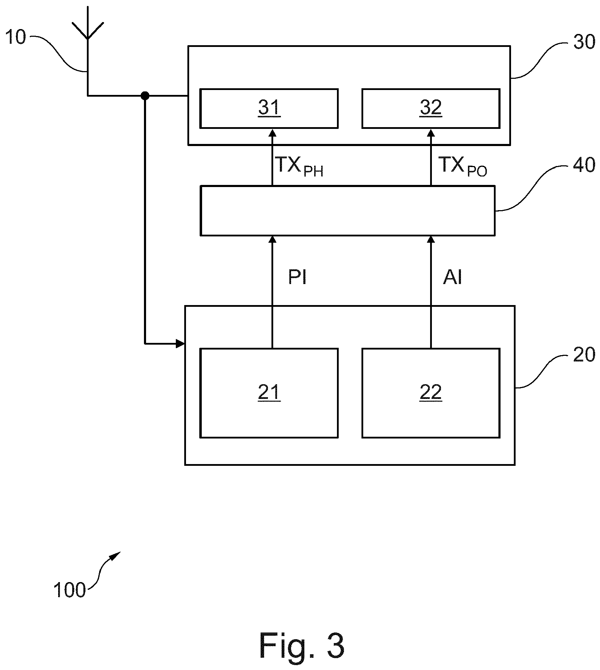

FIG. 3 shows an exemplary implementation of a proposed radar system 100 which is adapted to provide optimized signals as mentioned above in the context of FIG. 2. The arrangement of FIG. 3 is characterized by the fact that the transmitting unit 30 and receiving unit have a common antenna 10. However, alternative arrangements are possible, where the transmitting unit 30 and the receiving unit 20 each have their own antenna (not shown). A signal is received via an antenna 10 of the radar system 100. Detecting units 21, 22 of a receiving unit 20 identify the phase and amplitude of the strongest received signal, wherein a first detecting unit 21 detects a maximal signal phase and a second detecting unit 22 detects a maximal signal amplitude of the received signal.

For a radar system 100 having a shared TRX antenna (i.e. which is used for transmitter and receiver) as shown in FIG. 3, the strongest received signal is typically caused by self-interference. For a radar system with separate RX and TX antennas (not shown), the strongest signal is typically caused by a reflection from the closest object.

Phase information PI and amplitude information AI are fed to a controlling unit 40, which adjusts the phase and amplitude in the transmitting unit 30, to maximise the dynamic range in the receiving unit 20 as explained above. To this end, information regarding TX phase TX_{PH} is fed to a first configuration unit 31 of the transmitting unit 30. For the sake of setting the power, information regarding transmitting power TX_{PO} is fed to a second configuration unit 32 of the transmitting unit 30.

As explained above in the context of FIG. 2, a phase angle of 45° (1. quadrant) or 225° (3. quadrant) degrees is optimal, as both quadrature branches I, Q can operate with full swing, i.e. 3dB gain compared to a phase of zero degrees. However, any of the four quadrants is possible, i.e. also 135° (2. quadrant) and 315° (4. quadrant). The controlling unit 40 hence adjusts the phase to reach the optimum. The transmitting power is adjusted, such that the swing of each quadrature branch is fully utilized.

FIG. 3 shows an embodiment with shared pins (a connection of TX in the RX represent strongest channel impulse response component), however, also other embodiments are conceivable, wherein crosstalk with separate antennas is conceivable.

In the following, several alternative possibilities to implement the functionality "configurable phase" are listed.

Firstly, a configurable delay can be arranged in:
- RF path of the transmitting unit 30, or
- RF path of the receiving unit 20, or
- LO (local oscillator) path of the transmitting unit 30, or
- LO path of the receiving unit 20.

The delay provides a delay in the order of picoseconds, which results in a corresponding setting of the phase. Of course, also combinations of the above shown alternatives are possible. The absolute time to rotate the phase let's say of 1 degree depends on the carrier frequency. It should be noted however, that picoseconds are exemplary, it could mean a phase rotation of a sub degree or more than 360 degrees depending on the carrier frequency.

Alternatively, to implement the functionality "configurable phase", a complex rotator can be arranged in:
- TX baseband path, or
- baseband path of the receiving unit 20.

Furthermore, to implement the functionality "configurable phase", the carrier frequency of the radar system can be adjusted appropriately.

It has to be taken into account, that there is always a certain propagation delay between TX and RX. The resulting phase rotation depends on the carrier frequency.

Exemplary embodiments of the functionality "configurable power" by means of the information TX_{PO} are listed as follows:
A configurable power amplifier can be arranged in the RF path of the transmitting unit 30.

Alternatively, a configurable attenuator or gain stage may be arranged in RF path of the receiving unit 20.

Proposed is a radar system 100 with detecting units 21, 22 in the receiving unit 20, which allow a downstream controlling unit 40 to adjust the phase and amplitude of signals in a such a way, that dynamic ranges of the received signals can be maximized.

In this way, it is possible to avoid back-off for the proposed radar system, by utilizing a calibration loop to adjust the phase of the strongest CIR tap and the transmitting power such that the full dynamic range can be used in the field.

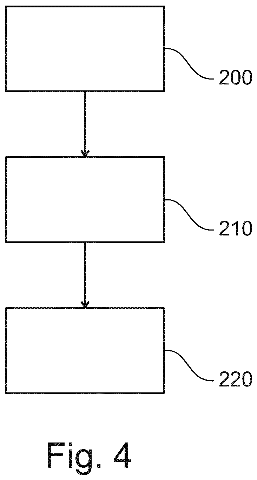

FIG. 4 shows a flow of a proposed method of operating a radar system.

In a step 200 a signal is received.

In a step 210 a maximal amplitude and a corresponding phase of the received signal are determined.

In a step 220, depending on the determined phase and maximal amplitude, at least one of the following steps is performed:
a) setting the phase of the signal such that a phase angle of the received signal lies approximately in a middle of a quadrant of an I/Q diagram;
b) amplifying the received signal such that the dynamic range of a receiving unit 20 of the radar system 100 is optimized.

The present disclosure avoids the back-off, by utilizing a calibration loop to adjust the phase of the strongest CIR tap and the TX power such that the full dynamic range can be used in the field.

As examples, the specification describes and/or illustrates aspects useful for implementing the claimed disclosure by way of various circuits or circuitry which may be illustrated as or using terms such as blocks, modules, device, system, unit, controller, etc. and/or other circuit-type depictions. Such circuits or circuitry are used together with other elements to exemplify how certain embodiments may be carried out in the form or structures, steps, functions, operations, activities, etc. As examples, wherein such circuits or circuitry may correspond to logic circuitry (which may refer to or include a code-programmed/configured CPU, in one example the logic circuitry may carry out a process or method (sometimes "algorithm") by performing such activities and/or steps associated with the above-discussed functionalities. In other examples, the logic circuitry may carry out a process or method by performing these same activities/operations.

For example, in certain of the above-discussed embodiments, one or more modules are discrete logic circuits or programmable logic circuits configured and arranged for implementing these operations/activities. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described above is used by the programmable circuit to perform the related steps, functions, operations, activities, etc. Depending on the application, the instructions (and/or configuration data) can be configured for implementation in logic circuitry, with the instructions (whether characterized in the form of object code, firmware or software) stored in and accessible from a memory (circuit). As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also elements described in association with different embodiments may be combined. It should also be noted, that reference signs in the claims should not be construed as limiting the scope of the claims.

The devices, apparatuses, units, elements, systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document. Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

### Reference signs:

- 10: antenna
- 20: receiving unit
- 21: first detecting unit
- 22: second detecting unit
- 30: transmitting unit
- 31: first configuration unit
- 32: second configuration unit
- 40: controlling unit
- 100: radar system
- 200...220: method steps
- G: gain
- RX_{GS}: RX gain step size
- DR₁: worst case dynamic range of conventional systems
- DR₂: maximal dynamic range
- PI: phase information
- AI: amplitude information
- S1...S6: signal

## Claims

1. Method of operating a radar system (100) comprising the steps:
- receiving a signal;
- determining a maximal amplitude and a corresponding phase of the received signal and, depending on the determined phase and maximal amplitude, performing at least one of the following steps:
a) setting the phase of the signal such that a phase angle of the received signal lies approximately in a middle of a quadrant of an I/Q diagram;
b) amplifying the received signal such that the dynamic range of a receiving unit (20) of the radar system (100) is optimized.

2. Method according to claim 1, wherein in step a) the phase is set in a range of appr. 40 degrees to appr. 50 degrees, preferably to appr. 45 degrees with respect to a quadrant of the I/Q diagram.

3. Method according to claim 1 or 2, wherein in step a) the setting of the phase is performed completely in the receiving unit (20), or wherein in step a) the setting of the phase is performed completely in a transmitting unit (30), or wherein in step a) the setting of the phase is performed at least partially in the receiving unit (20).

4. Method according to claim 3, wherein in step a) the setting of the phase is performed at least partially in the transmitting unit (30) of the radar system (100).

5. Method according to any of the preceding claims, wherein in step a) the setting of the phase is performed by means of a configurable delay.

6. Method according to any of the preceding claims, wherein in step a) the setting of the phase is performed by means of a complex rotator.

7. Method according to any of the preceding claims, wherein the determination of the phase is performed by means of the receiving unit (20) and the setting of at least the phase or the power is performed by means of the transmitting unit (30).

8. Method according to any of the preceding claims, wherein the gain of the receiving unit (20) is adjustable in specified steps.

9. Method according to any of the preceding claims, wherein in step a) the phase is set in the baseband domain by means of a complex rotator.

10. Method according to any of the preceding claims, wherein in step b) the transmitting unit (30) is controlled, that it matches gain levels of the receiving unit (20), wherein a maximum gain level of the receiving unit is observed.

11. Radar system (100), comprising:
- means for receiving a signal;
- means for determining a phase and a maximal amplitude of the received signal; and
- means for setting the phase in dependence of the determined phase and maximal amplitude such that a dynamic range of a receiving unit (20) of the radar system (100) is optimized.

12. Radar system (100) according to claim 11, wherein the means for determining the maximal signal is at least partially arranged in the receiving unit (20) or in a controlling unit (40).

13. Radar system (100) according to claim 12, wherein the phase of the received signal is configured by means of a configurable delay.

14. Radar system (100) according to claim 13, wherein the configurable delay is arranged at least partially in at least one of the following units: RF path of transmitting unit (30), RF path of receiving unit (20), local oscillator of transmitting unit (30), local oscillator of receiving unit (20).

15. Computer-implemented method comprising executable instructions which, when executed by a radar system (100) causes said radar system (100) to carry out the method of any of claims 1 to 9.
